# FASCICULE DE BREVET EUROPEEN

(11) **EP 1 603 341 B1**
(45) Date de publication et mention de la délivrance du brevet: **11.07.2007**
(21) Numéro de dépôt: 05291080.9
(22) Date de dépôt: 19.05.2005
(51) Int. Cl.: H04N 7/26, H04N 5/14

(54) **Procédé et dispositif pour les systèmes d'interpolation d'images par estimation et compensation de mouvement**
Verfahren und Anordnung für Bildinterpolierungssysteme mit Bewegungsschätzung und -kompensation
Method and device for image interpolation systems using motion estimation and compensation

(30) Priorité: 25.05.2004 FR 0405634
(43) Date de publication de la demande: 07.12.2005
(73) Titulaire: STMicroelectronics SA, 92120 Montrouge (FR)
(72) Inventeur: Nicolas Marina, 38120 Le Fontanil Cornillon (FR)
(74) Mandataire: Verdure, Stéphane

(56) Documents cités:
- WO-A-99/40726
- WO-A-02/087210
- WO-A-03/102872

## Description

La présente invention est relative au domaine de l'affichage séquentiel d'images, et plus précisément, aux procédés de traitement d'images pour l'encodage d'images ou l'insertion d'images, au sein d'une séquence d'images de type vidéo ou film.

Dans certains systèmes de traitement d'images vidéo ou film, le débit d'images (nombre d'images par seconde) est insuffisant pour un affichage de qualité. Par conséquent, des images supplémentaires sont générées via une fonction d'interpolation et affichées entre des images d'origine pour augmenter le débit d'images et améliorer la qualité de l'affichage. Une fonction d'interpolation de ce type calcule classiquement la valeur des pixels d'une image interpolée en fonction notamment de la valeur des pixels de l'image d'origine précédente et/ou de la valeur des pixels de l'image d'origine suivante.

Une telle fonction d'interpolation est basée sur la corrélation qui existe entre des images successives d'une vidéo ou d'un film. En effet, dans une séquence d'images vidéo, des sujets qui se déplacent apparaissent généralement dans des zones différentes respectives de plusieurs images consécutives. On génère donc des images interpolées à partir de parties d'images d'origine précédentes et/ou suivantes.

Une image est classiquement divisée en blocs de pixels et on fait l'hypothèse que chaque bloc se retrouve sensiblement à l'identique d'une image à l'autre même s'il y a eu un mouvement de ce bloc entre deux images. De ce fait, une image est interpolée à partir d'images d'origine en recherchant pour chaque bloc courant de l'image en cours d'interpolation, celui des blocs d'une image d'origine précédente et/ou d'une image d'origine suivante qui est le plus probable.

Des procédés d'estimation et/ou de compensation de mouvement proposent des méthodes de recherche de blocs ainsi adaptés pour la génération d'images interpolées. Une corrélation entre les parties des images consécutives où un objet en déplacement apparaît, peut s'exprimer via un vecteur de mouvement. Ce dernier représente le mouvement d'un bloc de pixels d'une image à l'autre. Il a une composante verticale et une composante horizontale, représentant le déplacement qui doit être appliqué à un bloc d'une image précédente pour arriver à la position d'un bloc de pixels sensiblement identique dans une image suivante.

De tels procédés sont classiquement utilisés dans des systèmes de compression de données vidéo, comme par exemple des systèmes basés sur la norme MPEG. De tels systèmes permettent de réduire la quantité des données d'image à transmettre ou à mémoriser en compressant ces données afin de permettre leur transfert rapide sur des réseaux numériques ou encore des lignes téléphoniques ou leur enregistrement sur des médias numériques. Par conséquent, seules certaines images de référence sont codées et transmises puis, côté réception, les images intermédiaires manquantes sont interpolées en fonction des vecteurs de mouvement transmis avec les images codées.

Dans de tels systèmes, côté émission, on traite l'image intermédiaire afin de transmettre le moins d'informations possibles, comme cela est dit ci-dessus. Ainsi, l'image intermédiaire est divisée en blocs. Pour chaque bloc, une corrélation est calculée entre le bloc courant et une sélection de blocs candidats d'une image d'origine ou déjà traitée précédente et/ou suivante. Ce calcul de corrélation fournit une erreur relative à chaque bloc candidat. Un bloc candidat est élu pour représenter le bloc courant de l'image intermédiaire. Le bloc candidat élu est celui qui présente la plus grande corrélation avec le bloc courant, ou encore l'erreur la plus faible. Afin de permettre l'interpolation des images intermédiaires côté réception, l'image traitée est transmise via les informations suivantes qui sont généralement émises relativement à un bloc courant d'une image à interpoler :
- une indication du bloc candidat élu ;
- un vecteur de mouvement représentant une translation du bloc candidat élu vers la position du bloc courant ;
- une erreur fournie par le calcul de corrélation.

Ainsi, côté réception, les images traitées manquantes sont interpolées sur la base des informations reçues avec les images codées et une valeur des pixels de chaque bloc de ces images est ainsi déterminée.

Certains systèmes d'affichage d'images entrelacées utilisent également des procédés d'estimation et/ou de compensation de mouvement.

Des dispositifs de conversion de débit d'images mettent aussi en oeuvre de tels procédés. En effet ces dispositifs permettent d'augmenter un débit d'images d'origine en générant des images supplémentaires par interpolation des images d'origine. Ces dispositifs sont classiquement utilisés pour adapter des débits d'images entre un système de génération, codage, transmission et/ou stockage d'images d'une part, et un système d'affichage d'images d'autre part, qui impliquent des débits d'images différents.

Dans ce cas, l'image à interpoler est également divisée en blocs. Pour chacun des blocs, une génération de vecteurs candidats est généralement effectuée. A chacun des vecteurs candidats, un bloc dans l'image d'origine précédente et un bloc dans l'image d'origine suivante correspondants à une translation de la position du bloc courant relative au vecteur candidat sont sélectionnés, puis un calcul de corrélation entre le bloc sélectionné de l'image précédente et le bloc sélectionné de l'image suivante est effectué. Le vecteur candidat élu est le vecteur pour lequel on calcule la plus grande corrélation. Le bloc courant est alors interpolé à partir du bloc dans l'image d'origine précédente et du bloc dans l'image d'origine suivante associés au vecteur candidat élu. On obtient ainsi la génération d'images par interpolation.

Les termes « image traitée » font référence à des images divisées en une pluralité de blocs pour lesquels un vecteur de mouvement a été élu. Ainsi, par interpolation des images traitées, on génère des images interpolées.

La section suivante présente des notions de base classiquement utilisées dans des procédés d'estimation de mouvement. On distingue communément plusieurs types d'images : des images d'origine de type I (Intra) qui sont codées sans référence à d'autres images, des images de type P (Predictives) qui sont interpolées via un algorithme d'estimation de mouvement sur la base d'une image d'origine précédente, et des images de type B (Bidirectionnelles) qui sont interpolées via un algorithme d'estimation de mouvement sur la base d'une image d'origine précédente et d'une image d'origine suivante.

Plus généralement, une estimation de mouvement repose sur l'hypothèse qu'un bloc de pixels de l'image en cours de traitement peut être modélisé en tant que translation d'un bloc de l'image d'origine précédente et/ou suivante. Dans une telle modélisation, on suppose donc que chaque pixel d'un même bloc de pixels subit sensiblement la même translation. Un vecteur de mouvements associé à chaque bloc de pixels d'une image traitée représente ce mouvement de translation. Puis, en appliquant à chacun des blocs de pixels de l'image d'origine précédente et/ou des blocs de pixels de l'image d'origine suivante une translation correspondant respectivement au vecteur de mouvement associé, on génère chaque bloc courant de l'image en cours de traitement à partir d'un bloc de pixels de l'image d'origine précédente et/ou suivante pour obtenir une image interpolée.

Dans des procédés d'estimation de mouvement, le vecteur de mouvement associé au bloc de pixels courant est élu parmi un ensemble de vecteurs de mouvement candidats. Dans des procédés classiques, on calcule une erreur pour chacun des vecteurs de mouvement candidats et le vecteur de mouvement élu est celui qui, parmi les vecteurs de mouvement candidats, présente la plus petite erreur calculée, c'est-à-dire la plus grande corrélation.

Lorsque, pour un bloc courant donné, les erreurs calculées pour au moins deux des vecteurs de mouvement candidats sont sensiblement équivalentes, il est difficile d'élire le vecteur de mouvement le plus adapté pour ce bloc courant. Or, les performances de tels procédés dépendent notamment du choix du vecteur de mouvement destiné à être associé au bloc courant puisque l'image interpolée est obtenue à partir de cette information. Dans des cas où il est difficile d'élire un vecteur de mouvement en fonction de l'erreur calculée, certains procédés prévoient d'appliquer des pénalités aux erreurs calculées pour les vecteurs de mouvement candidats.

On connaît ainsi des procédés d'estimation de mouvement suivant lesquels une pénalité est appliquée à l'erreur calculée pour chaque vecteur candidat afin de fournir une erreur modulée relative au vecteur candidat. Le vecteur de mouvement élu pour un bloc courant est celui, parmi les vecteurs de mouvement candidats, qui présente la plus petite erreur ainsi modulée.

La demande de brevet WO/02/87210 divulgue un procédé de calcul d'erreur avec pénalité, la pénalité dépendant de la position et de la norme des vecteurs de mouvement candidats.

La présente invention vise à améliorer les procédés de calcul d'erreurs modulées avec pénalité. Ainsi, l'invention divulgue un procédé suivant lequel une pénalité adaptative est déterminée, pour un vecteur candidat, en fonction de caractéristiques relatives aux valeurs des pixels du bloc associé correspondant au vecteur candidat.

Un premier aspect de l'invention propose ainsi un procédé d'estimation de mouvement pour traiter des images destinées à s'insérer chacune entre une image d'origine précédente et une image d'origine suivante dans une séquence d'images déterminées, chaque image étant divisée en une pluralité de blocs de pixels, un vecteur de mouvement étant associé à chacun des blocs de pixels d'une image traitée, le procédé comprenant pour un bloc courant d'une image en cours de traitement, les étapes de:
- sélection de vecteurs de mouvement associés à des blocs de pixels respectifs de l'image en cours de traitement et/ou de vecteurs de mouvement associés à des blocs de pixels respectifs d'une image traitée précédente, respectivement appelés vecteurs de mouvement spatiaux et vecteurs de mouvement temporels ;
- génération de vecteurs de mouvement candidats à partir desdits vecteurs de mouvement sélectionnés ;
- calcul d'une erreur pour chacun des vecteurs de mouvement candidats ;
- détermination d'une pénalité pour au moins un sous ensemble des vecteurs de mouvement candidats ;
- élection d'un vecteur de mouvement parmi lesdits vecteurs de mouvement candidats en fonction de ladite erreur calculée et de ladite pénalité déterminée;
- mémorisation d'une information associant ledit vecteur de mouvement élu au bloc de pixels courant;
suivant lequel ladite pénalité est déterminée en fonction au moins des valeurs de pixels du bloc de pixels dans l'image d'origine précédente à partir duquel le vecteur de mouvement candidat pointe le bloc courant et/ou en fonction au moins des valeurs du bloc de pixels dans l'image d'origine suivante pointé par le vecteur de mouvement candidat à partir du bloc courant.

Dans un mode de réalisation de l'invention, pour un vecteur de mouvement candidat généré à partir d'un vecteur de mouvement spatial, on calcule une première valeur correspondant à la luminance moyenne des pixels du bloc de pixels dans l'image d'origine précédente à partir duquel le vecteur de mouvement candidat pointe le bloc courant. Puis, on calcule une deuxième valeur correspondant à la luminance moyenne des pixels du bloc de pixels dans l'image d'origine précédente à partir duquel le vecteur de mouvement candidat pointe le bloc de pixels auquel est associé le vecteur de mouvement à partir duquel ledit vecteur de mouvement candidat est généré. On détermine alors la pénalité en fonction d'une comparaison des première et deuxième valeurs en sorte que la pénalité est relativement élevée lorsque les première et deuxième valeurs sont sensiblement différentes et est relativement faible lorsque les premières et secondes valeurs sont sensiblement équivalentes.

Dans un mode de réalisation de la présente invention, pour un vecteur de mouvement candidat généré à partir d'un vecteur de mouvement spatial, on peut en outre calculer une troisième valeur correspondant à la luminance moyenne des pixels du bloc de pixels dans l'image d'origine suivante pointé par le vecteur de mouvement candidat à partir du bloc courant. Puis, on peut calculer une quatrième valeur correspondant à la luminance moyenne des pixels du bloc de pixels dans l'image d'origine suivante pointé par le vecteur de mouvement candidat à partir du bloc de pixels auquel est associé le vecteur de mouvement à partir duquel le vecteur de mouvement candidat est généré. Ensuite, on peut alors déterminer la pénalité en fonction d'une comparaison des troisième et quatrième valeurs en sorte que la pénalité est relativement élevée lorsque les troisième et quatrième valeurs sont sensiblement différentes et est relativement faible lorsque les troisième et quatrième valeurs sont sensiblement équivalentes.

Dans un mode de réalisation, pour un vecteur de mouvement candidat généré à partir d'un vecteur de mouvement temporel, on peut calculer une cinquième valeur correspondant au contraste maximum entre pixels du bloc de pixels de l'image d'origine précédente à partir duquel le vecteur candidat pointe le bloc de pixels courant. Ensuite, on détermine la pénalité en fonction de la cinquième valeur en sorte que la pénalité est relativement élevée lorsque la cinquième valeur est relativement faible et est relativement faible lorsque la cinquième valeur est relativement élevée.

Dans un mode de réalisation de la présente invention, pour un vecteur de mouvement candidat généré à partir d'un vecteur de mouvement temporel, on peut calculer une sixième valeur correspondant au contraste maximum entre pixels dans le bloc de pixels de l'image d'origine suivante pointé par le vecteur candidat à partir du bloc de pixels courant. On détermine ensuite la pénalité en fonction de la sixième valeur en sorte que la pénalité est relativement élevée lorsque la sixième valeur est relativement faible et est relativement faible lorsque la sixième valeur est relativement élevée.

Dans un mode de réalisation de la présente invention, le sous-ensemble de vecteurs de mouvement candidats comprend le vecteur de mouvement candidat présentant la plus faible erreur et un nombre déterminé de vecteurs de mouvement candidats présentant des erreurs dont la différence avec la plus faible erreur est inférieure à une valeur seuil déterminée.

Un second aspect de l'invention propose un dispositif d'estimation de mouvement pour traiter des images destinées à s'insérer chacune entre une image d'origine précédente et une image d'origine suivante dans une séquence d'images déterminées, chaque image étant divisée en une pluralité de blocs de pixels, un vecteur de mouvement étant associé à chacun des blocs de pixels d'une image traitée, le dispositif comprenant pour un bloc courant d'une image en cours de traitement:
- une unité de sélection pour sélectionner des vecteurs de mouvement associés à des blocs de pixels respectifs de l'image en cours de traitement et/ou de vecteurs de mouvement associés à des blocs de pixels respectifs d'une image traitée précédente, respectivement appelés vecteurs de mouvement spatiaux et vecteurs de mouvement temporels ;
- une unité de génération pour générer des vecteurs de mouvement candidats à partir desdits vecteurs de mouvement sélectionnés ;
- une unité de calcul pour calculer une erreur pour chacun des vecteurs de mouvement candidats ;
- une unité de détermination pour déterminer une pénalité pour au moins un sous ensemble des vecteurs de mouvement candidats ;
- une unité d'élection pour élire un vecteur de mouvement parmi lesdits vecteurs de mouvement candidats en fonction de ladite erreur calculée et de ladite pénalité déterminée;
- une mémoire pour mémoriser une information associant ledit vecteur de mouvement élu au bloc de pixels courant;
dans lequel ladite pénalité est déterminée en fonction au moins des valeurs de pixels du bloc de pixels dans l'image d'origine précédente à partir duquel le vecteur de mouvement candidat pointe le bloc courant et/ou en fonction au moins des valeurs du bloc de pixels dans l'image d'origine suivante pointé par le vecteur de mouvement candidat à partir du bloc courant.

Un troisième aspect de l'invention propose un produit « programme d'ordinateur » chargeable directement dans la mémoire interne d'un ordinateur numérique, comprenant des portions de code de logiciel pour l'exécution des étapes du procédé selon le premier aspect lorsque ledit programme est exécuté dans l'ordinateur.

D'autres aspects, buts et avantages de l'invention apparaîtront à la lecture de la description d'un de ses modes de réalisation.

L'invention sera également mieux comprise à l'aide des dessins, sur lesquels :
- la figure 1 illustre les principales étapes d'un procédé selon un mode de réalisation de l'invention ;
- la figure 2 illustre une technique de calcul d'erreur;
- la figure 3, 4, 5, et 6 illustrent des techniques de calcul de pénalité selon un mode de mise en oeuvre de la présente invention.

Généralement, les procédés d'estimation de mouvement comprennent une étape dans laquelle on sélectionne, pour un bloc courant donné dans une image en cours de traitement, une pluralité de blocs de pixels, dans l'image traitée précédente ou dans l'image en cours de traitement, candidats pour représenter le bloc de pixels courant. Une telle sélection peut être réalisée par exemple en définissant des positions des blocs de pixels de l'image traitée précédente relativement à la position du bloc courant par exemple. Ainsi, chaque bloc de pixels candidat étant un bloc de l'image traitée précédente, un vecteur de mouvement lui est associé. De ce fait, en sélectionnant une pluralité de blocs de pixels dans l'image traitée précédente pour représenter le bloc courant, on sélectionne également une pluralité de vecteurs de mouvement qui leur sont respectivement associés.

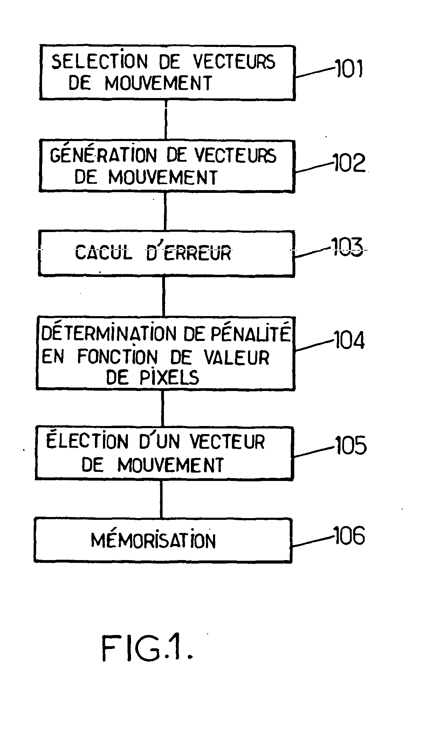

La figure 1 illustre les principales étapes effectuées pour chaque bloc de pixels d'une image en cours de traitement dans un procédé selon un mode de réalisation de l'invention. On sélectionne des vecteurs de mouvement associé à des blocs d'une image déjà traitée ou déjà associés à des blocs d'une image en cours de traitement, étape 101. Puis, à partir de chacun de ces vecteurs de mouvement sélectionnés, on génère un vecteur de mouvement candidat, étape 102. On calcule une erreur relative à chaque vecteur de mouvement candidat, étape 103. Un tel calcul d'erreur est détaillé ci-après. Puis, on détermine pour un sous ensemble des vecteurs de mouvement candidat, une valeur de pénalité en fonction de la valeur des pixels de certains blocs de pixels de l'image d'origine précédente et/ou de l'image d'origine suivante, étape 104. On élit ensuite parmi les vecteurs de mouvement candidats le vecteur de mouvement le plus adapté pour le bloc en cours de traitement, étape 105. Enfin, on mémorise une information associant le vecteur de mouvement élu au bloc de pixels en cours de traitement, étape 106.

Un procédé d'estimation de mouvement peut sélectionner des vecteurs de mouvement parmi des vecteurs de mouvement déjà associés à des blocs de pixels, soit dans une image traitée précédemment, soit encore dans la même image, respectivement nommés vecteurs de mouvement temporels et vecteurs de mouvement spatiaux selon des critères très divers. La présente invention couvre tout autre type de sélection de vecteurs de mouvement

Quelque soit le type de sélection de vecteurs de mouvement pour un bloc courant, on génère classiquement des vecteurs candidats à partir des vecteurs de mouvement sélectionnés. On notera que les termes « génération de vecteur candidat à partir de vecteurs de mouvement » font référence au fait que les vecteurs candidats peuvent être différents des vecteurs de mouvements sélectionnés. En effet, les vecteurs de mouvement sélectionnés peuvent être adaptés pour la génération de vecteurs candidats permettant d'optimiser la performance de tels procédés de traitement d'images.

Puis, on effectue généralement une étape d'élection du vecteur de mouvement le plus adapté au bloc courant parmi les vecteurs candidats générés. Afin de déterminer le plus adapté des vecteurs candidats, on calcule une erreur pour chacun des vecteurs de mouvement candidats. Ce calcul d'erreur est classiquement obtenu par corrélation pixel par pixel de certains blocs de pixels. Dans des systèmes de compression d'images, on réalise de préférence une corrélation entre un bloc de pixels d'une image d'origine suivante ou précédente avec le bloc de pixels courant. En effet, dans de tels systèmes, cette étape étant réalisée du côté émission, on dispose de la valeur des pixels du bloc courant. Dans des systèmes de conversion de débit d'images, ne disposant pas de la valeur des pixels du bloc courant en cours de traitement, on réalise préférablement une corrélation de blocs de pixels de l'image d'origine suivante et/ou précédente.

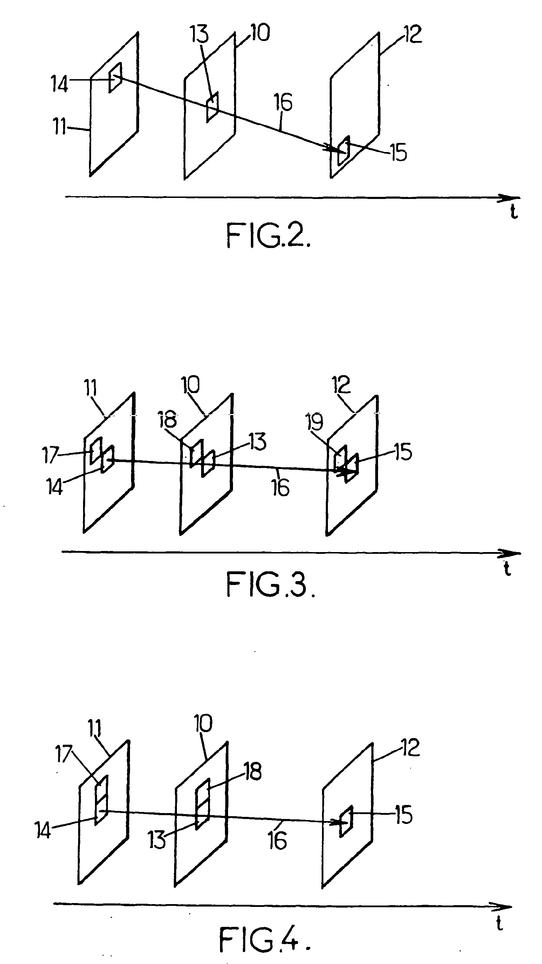

La figure 2 illustre un calcul d'erreur par corrélation de blocs de pixels dans un système de conversion de débit de d'images. L'image en cours de traitement 10 comprend un bloc courant 13. L'image en cours de traitement 10 est traitée en fonction d'une image d'origine précédente 11 et d'une image d'origine suivante 12. Une corrélation est réalisée entre un premier bloc de pixels 14 dans l'image d'origine précédente 11 et un deuxième bloc de pixels 15 dans l'image d'origine suivante 12. Le premier bloc de pixels 14 est le bloc de pixels depuis lequel on pointe le bloc de pixels courant 13 en appliquant le vecteur candidat 16. Le deuxième bloc de pixels 15 est le bloc de pixels pointé par le vecteur candidat 16 depuis le bloc de pixels courant 13. On calcule alors les différences des valeurs de pixels entre les deux blocs 14 et 15, pixel par pixel. Une erreur est alors obtenue dont la valeur est égale à la somme des valeurs absolues de ces différences.

La présente invention couvre tout autre méthode de calcul d'erreur relativement à un vecteur candidat pour un bloc courant.

Dans un mode de réalisation de la présente invention, la pénalité à appliquer à une erreur relative à un vecteur candidat généré à partir d'un vecteur de mouvement spatial est de préférence basée sur le principe énoncé ci-après. Un vecteur de mouvement déjà associé à un bloc de pixels d'une image traitée ou en cours de traitement est d'autant plus représentatif du mouvement de l'ensemble des pixels du bloc courant que le bloc auquel il est associé appartient au même objet que l'objet au quel appartient le bloc courant. En effet, il apparaît plus probable que différentes parties d'un même objet aient le même mouvement au fil des images que des parties de différents objets.

La présente invention propose d'appliquer avantageusement ce principe. A cet effet, dans un mode de réalisation de l'invention, un vecteur candidat généré à partir d'un vecteur de mouvement associé à un bloc de pixels appartenant au même objet que le bloc de pixels courant est de préférence élu pour le bloc courant. Inversement, un vecteur candidat généré à partir d'un vecteur de mouvement associé à un bloc de pixels appartenant à un objet différent de celui auquel appartient le bloc courant est de préférence défavorisé quant à son élection.

Afin de déterminer si deux blocs de pixels sont des blocs d'un même objet, dans un mode de réalisation de l'invention, on se réfère à une comparaison de luminance moyenne. Ainsi, deux blocs présentant une luminance moyenne sensiblement équivalente, sont par hypothèse deux blocs appartenant au même objet. Par contre, deux blocs présentant une luminance moyenne sensiblement différente sont par hypothèse deux blocs appartenant à des objets distincts.

Ainsi, dans un mode de réalisation de l'invention, afin de déterminer une pénalité relative à un vecteur candidat généré à partir d'un vecteur de mouvement spatial, on calcule la luminance moyenne d'un premier et d'un second blocs de pixels dans l'image d'origine précédente, le premier bloc de pixels correspondant au bloc de pixels à partir duquel le vecteur candidat pointe le bloc de pixels courant et le second bloc de pixels correspondant au bloc de pixels à partir duquel le vecteur candidat pointe le bloc de pixels auquel est associé le vecteur de mouvement spatial à partir duquel le vecteur candidat a été généré. On notera que, de préférence, de tels calculs de luminance sont réalisés pour les vecteurs candidats présentant des erreurs calculées sensiblement équivalentes, ou tout au moins dont les erreurs ne permettent pas d'élire de façon certaine le plus adapté des vecteurs candidats.

Lorsque les luminances du premier et du second bloc de pixels ainsi obtenues sont sensiblement équivalentes, une pénalité de valeur relativement faible est appliquée. Inversement, lorsque les luminances sont sensiblement différentes, une pénalité de valeur relativement élevée est appliquée à ce vecteur candidat.

La figure 3 illustre un procédé pour déterminer une pénalité selon un mode de réalisation de l'invention. Pour le bloc courant 13 dans l'image en cours de traitement 10, un vecteur candidat 16 est généré à partir d'un vecteur de mouvement associé à un bloc de pixels voisin 18 du bloc courant 13 et déjà traité dans l'image en cours de traitement. Ainsi, la luminance moyenne est calculée pour le bloc de pixels 14, à partir duquel on pointe le bloc courant 13 avec le vecteur candidat 16. La luminance moyenne est calculée pour le bloc de pixels 17 à partir duquel on pointe le bloc de pixels voisin 18 avec le vecteur candidat 16. Si les deux luminances moyennes sont sensiblement équivalentes, la pénalité attribuée au vecteur candidat 16 est relativement faible. Par contre si les deux luminances moyennes sont sensiblement différentes, la pénalité attribuée au vecteur candidat 16 est relativement élevée.

Un tel procédé de détermination d'une pénalité peut également être réalisé pour des blocs de l'image d'origine suivante. Ainsi, la luminance moyenne est calculée pour le bloc de pixels 15, pointé par le vecteur candidat 16 à partir du bloc courant 13. La luminance moyenne est calculée pour le bloc de pixels 19 pointé par le vecteur candidat 16 à partir du bloc de pixels voisin 18. Si les deux luminances moyennes sont sensiblement équivalentes, la pénalité attribuée au vecteur candidat 16 est relativement faible. Par contre si les deux luminances moyennes sont sensiblement différentes, la pénalité attribuée au vecteur candidat 16 est relativement élevée.

Pour des systèmes de compression d'images, on dispose des valeurs des pixels des blocs de l'image en cours de traitement, ainsi la luminance moyenne peut être calculée pour le bloc courant 13 et pour le bloc de pixels voisin 18. En comparant les deux luminances moyennes, une pénalité peut être déterminée de la même façon que précédemment.

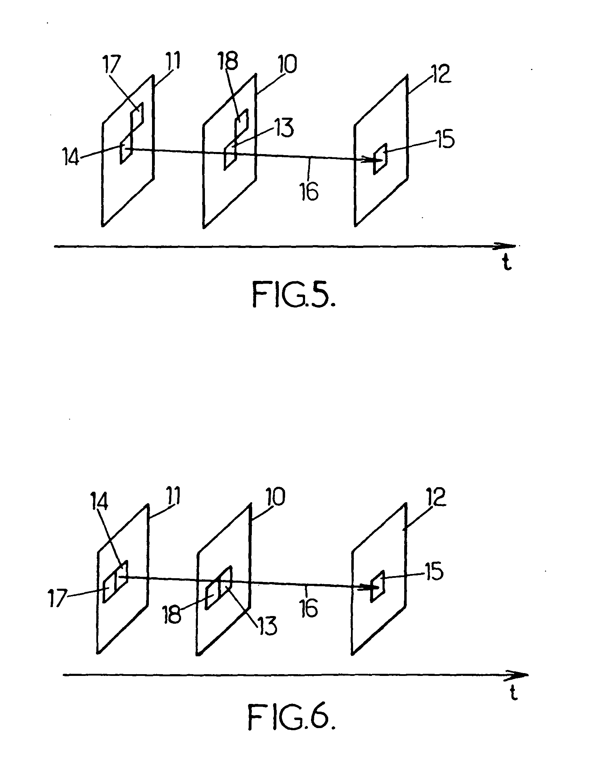

Les figures 4, 5 et 6 illustrent le même procédé pour déterminer une pénalité.

Dans un mode de réalisation de la présente invention, la pénalité à appliquer à une erreur relative à un vecteur candidat généré à partir d'un vecteur de mouvement temporel est basée sur le principe énoncé ci-après.

Généralement, on réalise un calcul d'erreur en effectuant des différences de valeur de pixels, pixel par pixel, comme cela a déjà été décrit précédemment. La somme des valeurs absolues des différences représente l'erreur. Par conséquent, si les pixels du bloc de pixels en cours de traitement sont relativement nombreux à suivre le mouvement représenté par un vecteur candidat depuis ou vers une image d'origine, alors la valeur de l'erreur obtenue respectivement pour ce vecteur candidat est relativement faible.

De ce qui précède, on comprend que pour un bloc de pixels présentant un faible contraste maximum, c'est-à-dire dans lequel les pixels ont des valeurs sensiblement équivalentes, la valeur de l'erreur rapportée à un même décalage sera relativement faible comparée à la valeur de l'erreur d'un bloc de pixel présentant un fort contraste, c'est-à-dire dans lequel les pixels ont des valeurs très sensiblement différentes. En effet, le moindre décalage d'un bloc de pixels contrastés conduit à une erreur de grande valeur. Alors que l'erreur calculée pour un décalage d'un bloc de pixels faiblement contrastés reste relativement faible. L'invention propose de mettre avantageusement en pratique ce principe.

Ainsi, dans un mode de réalisation de l'invention, pour les vecteurs candidats générés à partir de vecteurs de mouvement temporels, on détermine une pénalité de valeur relativement importante pour un vecteur candidat associé à un bloc de pixels peu contrastés alors qu'on détermine une pénalité relativement faible pour un vecteur de mouvement associé à un bloc de pixels fortement contrastés. De ce fait, quand l'erreur est sensiblement équivalente, on favorise l'élection des vecteurs candidats générés à partir de vecteur de mouvement temporel associés à des blocs de pixels plus contrastés. A cet effet, dans le bloc de pixels de l'image d'origine précédente à partir duquel le vecteur candidat pointe le bloc de pixels courant, on calcule la différence entre la valeur la plus faible des pixels du bloc et la valeur la plus élevée des pixels du bloc pour obtenir une valeur de contraste du bloc de pixels.

Dans un mode préféré de réalisation de l'invention, pour un vecteur candidat donné, la pénalité est ajoutée à l'erreur. L'amplitude maximale des pénalités est choisie afin de permettre une meilleure élection d'un vecteur de mouvement pour un bloc courant dans les cas où les différences des erreurs calculées pour plusieurs vecteurs candidats ne sont pas assez significatives.

De préférence, de tels calculs de luminance et/ou de contraste sont réalisés pour les vecteurs candidats présentant des erreurs calculées les plus faibles et sensiblement équivalentes, ou tout au moins dont les erreurs ne permettent pas d'élire de façon certaine le plus adapté des vecteurs candidats.

Ainsi, on définit une valeur seuil de différence d'erreurs au-dessous de laquelle on considère que deux ou plusieurs vecteurs candidats sont sensiblement équivalents quant à la représentation du mouvement des pixels du bloc. Dans un mode réalisation, une pénalité est déterminée seulement pour les vecteurs candidats présentant les plus faibles erreurs et parmi lesquels les différences d'erreur sont inférieures à la valeur seuil.

De bonnes performances sont obtenues par une mise en oeuvre simple d'un mode de réalisation de la présente invention.

L'invention permet d'améliorer le rendu de l'image en ce qui concerne les mouvements rapides et une meilleure homogénéité de performance dans la séquence des images. Elle peut avantageusement être mise en oeuvre dans des systèmes tels que définis en introduction.

## Revendications

1. Procédé d'estimation de mouvement pour traiter des images destinées à s'insérer chacune entre une image d'origine précédente et une image d'origine suivante dans une séquence d'images déterminées, chaque image étant divisée en une pluralité de blocs de pixels, un vecteur de mouvement étant associé à chacun des blocs de pixels d'une image traitée, le procédé comprenant pour un bloc courant d'une image en cours de traitement, les étapes de:
- sélection de vecteurs de mouvement respectivement associés à des blocs de pixels déterminés de l'image en cours de traitement et/ou de vecteurs de mouvement respectivement associés à des blocs de pixels déterminés d'une image déjà traitée, respectivement appelés vecteurs de mouvement spatiaux et vecteurs de mouvement temporels (101) ;
- génération de vecteurs de mouvement candidats à partir des vecteurs de mouvement ainsi sélectionnés (102) ;
- calcul d'une erreur pour chacun des vecteurs de mouvement candidats (103) ;
- détermination d'une pénalité pour au moins un sous-ensemble des vecteurs de mouvement candidats (104) ;
- élection d'un vecteur de mouvement parmi lesdits vecteurs de mouvement candidats en fonction de ladite erreur calculée et de la pénalité ainsi déterminée (105);
- mémorisation d'une information associant ledit vecteur de mouvement élu audit bloc de pixels courant (106);
suivant lequel ladite pénalité est déterminée en fonction des valeurs des pixels du bloc de pixels (14) dans l'image d'origine précédente (11) à partir duquel le vecteur de mouvement candidat (16) pointe le bloc courant (13) et/ou en fonction des valeurs des pixels du bloc de pixels (15) dans l'image d'origine suivante (12) pointé par le vecteur de mouvement candidat (16) à partir du bloc courant (13).

2. Procédé selon la revendication 1, comprenant en outre, pour un vecteur de mouvement candidat généré à partir d'un vecteur de mouvement spatial, les étapes de:
- calcul d'une première valeur correspondant à la luminance moyenne des pixels du bloc de pixels (14) dans l'image d'origine précédente (11) à partir duquel le vecteur de mouvement candidat (16) pointe le bloc courant (13) ;
- calcul d'une deuxième valeur correspondant à la luminance moyenne des pixels du bloc de pixels (17) dans l'image d'origine précédente (11) à partir duquel le vecteur de mouvement candidat (16) pointe le bloc de pixels (18) auquel est associé le vecteur de mouvement à partir duquel ledit vecteur de mouvement candidat (16) est généré ;
- détermination de la pénalité en fonction d'une comparaison desdites première et deuxième valeurs en sorte que la pénalité est relativement élevée lorsque lesdites première et deuxième valeurs sont sensiblement différentes et est relativement faible lorsque lesdites premières et secondes valeurs sont sensiblement équivalentes.

3. Procédé selon la revendication 1 ou 2, comprenant en outre, pour un vecteur de mouvement candidat généré à partir d'un vecteur de mouvement spatial, les étapes de:
- calcul d'une troisième valeur correspondant à la luminance moyenne des pixels du bloc de pixels (15) dans l'image d'origine suivante (12) pointé par le vecteur de mouvement candidat (16) à partir du bloc courant (13) ;
- calcul d'une quatrième valeur correspondant à la luminance moyenne des pixels du bloc de pixels (19) dans l'image d'origine suivante (12) pointé par le vecteur de mouvement candidat (16) à partir du bloc de pixels (18) auquel est associé le vecteur de mouvement à partir duquel le vecteur de mouvement candidat (16) est généré ;
- détermination de la pénalité en fonction d'une comparaison desdites troisième et quatrième valeurs en sorte que la pénalité est relativement élevée lorsque lesdites troisième et quatrième valeurs sont sensiblement différentes et est relativement faible lorsque lesdites troisième et quatrième valeurs sont sensiblement équivalentes.

4. Procédé selon l'une quelconque des revendications précédentes, comprenant en outre, pour un vecteur de mouvement candidat généré à partir d'un vecteur de mouvement temporel, les étapes de :
- calcul d'une cinquième valeur correspondant au contraste maximum entre pixels du bloc de pixels (14) de l'image d'origine précédente (11) à partir duquel le vecteur candidat pointe le bloc de pixels courant (13);
- détermination de la pénalité en fonction de ladite cinquième valeur en sorte que la pénalité est relativement élevée lorsque ladite cinquième valeur est relativement faible et est relativement faible lorsque ladite cinquième valeur est relativement élevée.

5. Procédé selon l'une quelconque des revendications précédentes, comprenant en outre, pour un vecteur de mouvement candidat généré à partir d'un vecteur de mouvement temporel, les étapes de :
- calcul d'une sixième valeur correspondant au contraste maximum entre pixels dans le bloc de pixels (15) de l'image d'origine suivante (12) pointé par le vecteur candidat (16) à partir du bloc de pixels courant (13) ;
- détermination de la pénalité en fonction de ladite sixième valeur en sorte que la pénalité est relativement élevée lorsque ladite sixième valeur est relativement faible et est relativement faible lorsque ladite sixième valeur est relativement élevée.

6. Procédé selon l'une quelconque des revendications précédentes, suivant lequel le sous-ensemble de vecteurs de mouvement candidats comprend le vecteur de mouvement candidat présentant la plus faible erreur et un nombre déterminé de vecteurs de mouvement candidats présentant des erreurs dont la différence avec ladite plus faible erreur est inférieure à une valeur seuil déterminée.

7. Dispositif d'estimation de mouvement pour traiter des images destinées à s'insérer chacune entre une image d'origine précédente et une image d'origine suivante dans une séquence d'images déterminées, chaque image étant divisée en une pluralité de blocs de pixels, un vecteur de mouvement étant associé à chacun des blocs de pixels d'une image traitée, le dispositif comprenant pour un bloc courant d'une image en cours de traitement :
- une unité de sélection pour sélectionner des vecteurs de mouvement respectivement associés à des blocs de pixels déterminés de l'image en cours de traitement et/ou de vecteurs de mouvement respectivement associés à des blocs de pixels déterminés d'une image déjà traitée, respectivement appelés vecteurs de mouvement spatiaux et vecteurs de mouvement temporels ;
- une unité de génération pour générer des vecteurs de mouvement candidats à partir des vecteurs de mouvement ainsi sélectionnés ;
- une unité de calcul pour calculer une erreur pour chacun des vecteurs de mouvement candidats ;
- une unité de détermination pour déterminer une pénalité pour au moins un sous-ensemble des vecteurs de mouvement candidats ;
- une unité d'élection pour élire un vecteur de mouvement parmi lesdits vecteurs de mouvement candidats en fonction de ladite erreur calculée et de la pénalité ainsi déterminée;
- une mémoire pour mémoriser une information associant ledit vecteur de mouvement élu au bloc de pixels courant;
dans lequel ladite pénalité est déterminée en fonction des valeurs des pixels du bloc de pixels (14) dans l'image d'origine précédente (11) à partir duquel le vecteur de mouvement candidat (16) pointe le bloc courant (13) et/ou en fonction des valeurs des pixels du bloc de pixels (15) dans l'image d'origine suivante (12) pointé par le vecteur de mouvement candidat (16) à partir du bloc courant (13).

8. Dispositif selon la revendication 7, comprenant en outre, pour un vecteur de mouvement candidat généré à partir d'un vecteur de mouvement spatial:
- une unité de calcul de luminance pour calculer une première valeur correspondant à la luminance moyenne des pixels du bloc de pixels (14) dans l'image d'origine précédente (11) à partir duquel le vecteur de mouvement candidat (16) pointe le bloc courant (13) ;
- une unité de calcul de luminance pour calculer une deuxième valeur correspondant à la luminance moyenne des pixels du bloc de pixels (17) dans l'image d'origine précédente (11) à partir duquel le vecteur de mouvement candidat (16) pointe le bloc de pixels (18) auquel est associé le vecteur de mouvement à partir duquel ledit vecteur de mouvement candidat (16) est généré ;
- une unité de détermination pour déterminer la pénalité en fonction d'une comparaison desdites première et deuxième valeurs en sorte que la pénalité est relativement élevée lorsque lesdites première et deuxième valeurs sont sensiblement différentes et est relativement faible lorsque lesdites première et deuxième valeurs sont sensiblement équivalentes.

9. Dispositif selon la revendication 7 ou 8, comprenant en outre, pour un vecteur de mouvement candidat généré à partir d'un vecteur de mouvement spatial:
- une unité de calcul de luminance pour calculer une troisième valeur correspondant à la luminance moyenne des pixels du bloc de pixels (15) dans l'image d'origine suivante (12) pointé par le vecteur de mouvement candidat (16) à partir du bloc courant (13) ;
- une unité de calcul de luminance pour calculer une quatrième valeur correspondant à la luminance moyenne des pixels du bloc de pixels (19) dans l'image d'origine suivante (12) pointé par le vecteur de mouvement candidat (16) à partir du bloc de pixels (18) auquel est associé le vecteur de mouvement à partir duquel le vecteur de mouvement candidat (16) est généré ;
- une unité de détermination pour déterminer la pénalité en fonction d'une comparaison desdites troisième et quatrième valeurs en sorte que la pénalité est relativement élevée lorsque lesdites troisième et quatrième valeurs sont sensiblement différentes et est relativement faible lorsque lesdites troisième et quatrième valeurs sont sensiblement équivalentes

10. Dispositif selon l'une quelconque des revendications 7 à 9, comprenant en outre, pour un vecteur de mouvement candidat généré à partir d'un vecteur de mouvement temporel :
- une unité de calcul de contraste pour calculer une cinquième valeur correspondant au contraste maximum entre pixels du bloc de pixels (14) de l'image d'origine précédente (11) à partir duquel le vecteur candidat pointe le bloc de pixels courant (13) ;
- une unité de détermination de la pénalité en fonction de la cinquième valeur, en sorte que la pénalité est relativement élevée lorsque ladite cinquième valeur est relativement faible et est relativement faible lorsque ladite cinquième valeur est relativement élevée.

11. Dispositif selon l'une quelconque des revendications 7 à 10, comprenant en outre, pour un vecteur de mouvement candidat généré à partir d'un vecteur de mouvement temporel :
- une unité de calcul de contraste pour calculer une sixième valeur correspondant au contraste maximum entre pixels du bloc de pixels (15) de l'image d'origine suivante (12) pointé par le vecteur candidat (16) à partir du bloc de pixels courant (13) ;
- une unité de détermination de la pénalité en fonction de la sixième valeur, en sorte que la pénalité est relativement élevée lorsque ladite sixième valeur est relativement faible et est relativement faible lorsque ladite sixième valeur est relativement élevée.

12. Dispositif selon l'une quelconque des revendications 7 à 11, dans lequel le sous-ensemble de vecteurs de mouvement candidats comprend le vecteur de mouvement candidat présentant la plus faible erreur et un nombre déterminé de vecteurs de mouvement candidats présentant des erreurs dont la différence avec ladite plus faible erreur est inférieure à une valeur seuil déterminée.

13. Produit « programme d'ordinateur » chargeable directement dans la mémoire interne d'un ordinateur numérique, comprenant des portions de code de logiciel pour l'exécution des étapes du procédé selon l'une quelconque des revendications 1 à 6 lorsque ledit programme est exécuté dans l'ordinateur.

## Claims

1. Motion estimation method for processing images intended to be inserted, each between a preceding original image and a following original image, in a sequence of determined images, each image being divided into a plurality of pixels blocks, a motion vector being associated with each of the pixels blocks of a processed image, the method comprising, in respect of a current block of an image being processed, the steps of:
- selection of motion vectors respectively associated with determined pixels blocks of the image being processed and/or of motion vectors respectively associated with determined pixels blocks of an already processed image, called spatial motion vectors and temporal motion vectors respectively (step 101);
- generation of candidate motion vectors from said selected motion vectors (step 102);
- calculation of an error for each of the candidate motion vectors (step 103);
- determination of a penalty for at least one subset of the candidate motion vectors (step 104);
- election of a motion vector among said candidate motion vectors on the basis of said calculated error and of said penalty thus determined (step 105); and
- storage of information associating said elected motion vector with the current pixels block (step 106);
wherein said penalty is determined according to values of the pixels of that pixels block (14) in the preceding original image (11) from which the candidate motion vector (16) points to the current block (13) and/or according to values of the pixels of that pixels block (15) in the following original image (12) to which the candidate motion vector (16) points from the current block (13).

2. Method according to Claim 1, which furthermore comprises, for a candidate motion vector generated from a spatial motion vector, the steps of:
- calculating a first value corresponding to the mean luminance of the pixels of the pixels block (14) in the preceding original image (11) from which the candidate motion vector (16) points to the current block (13);
- calculating a second value corresponding to the mean luminance of the pixels of the pixels block (17) in the preceding original image (11) from which the candidate motion vector (16) points to the pixels block (18) with which the motion vector is assiciated, from which said candidate motion vector (16) is generated; and
- determining the penalty on the basis of a comparison between said first and second values in such a way that the penalty is relatively large when said first and second values are substantially different and is relatively small when said first and second values are substantially equivalent.

3. Method according to Claim 1 or 2, which furthermore comprises, for a candidate motion vector generated from a spatial motion vector, the steps of:
- calculating a third value corresponding to the mean luminance of the pixels of the pixels block (15) in the following original image (12) to which the candidate motion vector (16) points from the current block (13);
- calculating a fourth value corresponding to the mean luminance of the pixels of the pixels block (19) in the following original image (12) to which the candidate motion vector (16) points from the pixels block (18) with which the motion vector, from which the candidate motion vector (16) is generated, is associated; and
- determining the penalty on the basis of a comparison between said third and fourth values in such a way that the penalty is relatively large when said third and fourth values are substantially different and is relatively small when said third and fourth values are substantially equivalent.

4. Method according to any one of the preceding claims, which furthermore comprises, for a candidate motion vector generated from a temporal motion vector, the steps of:
- calculating a fifth value corresponding to the maximum contrast between pixels of the pixels block (14) in the preceding original image (11) from which the candidate vector points to the current pixels block (13); and
- determining the penalty on the basis of said fifth value in such a way that the penalty is relatively large when said fifth value is relatively low and is relatively small when said fifth value is relatively high.

5. Method according to any one of the preceding claims, which furthermore comprises, for a candidate motion vector generated from a temporal motion vector, the steps of:
- calculating a sixth value corresponding to the maximum contrast between pixels in the pixels block (15) of the following original image (12) to which the candidate vector (16) points from the current pixels block (13); and
- determining the penalty on the basis of said sixth value in such a way that the penalty is relatively large when said sixth value is relatively low, and is relatively small when said sixth value is relatively high.

6. Method according to any one of the preceding claims, wherein the subset of candidate motion vectors includes the candidate motion vector having the lowest error and a determined number of candidate motion vectors having errors, the difference between which and said lowest error is less than a determined threshold value.

7. Motion estimation device for processing images intended to be inserted, each between a preceding original image and a following original image, in a sequence of determined images, each image being divided into a plurality of pixels blocks, a motion vector being associated with each of the pixels blocks of a processed image, the device comprising, in respect of a current block of an image being processed:
- a selection unit for selecting motion vectors respectively associated with the determined pixels blocks of the image being processed and/or motion vectors respectively associated with determined pixels blocks of an already processed image, called spatial motion vectors and temporal motion vectors respectively;
- a generation unit for generating candidate motion vectors from said selected motion vectors;
- a calculation unit for calculating an error for each of the candidate motion vectors;
- a determination unit for determining a penalty for at least one subset of the candidate motion vectors; and
- an election unit for electing a motion vector among said candidate motion vectors on the basis of said calculated error and of said penalty thus determined; and
- a memory for storing information associating said elected motion vector with the current pixels block;
wherein said penalty is determined according to values of the pixels of that pixels block (14) in the preceding original image (11) from which the candidate motion vector (16) points to the current block (13) and/or according to values of the pixels of that pixels block (15) in the following original image (12) to which the candidate motion vector (16) points from the current block (13).

8. Device according to Claim 7, which furthermore comprises, for a candidate motion vector generated from a spatial motion vector:
- a luminance calculation unit for calculating a first value corresponding to the mean luminance of the pixels of the pixels block (14) in the preceding original image (11) from which the candidate motion vector (16) points to the current block (13);
- a luminance calculation unit for calculating a second value corresponding to the mean luminance of the pixels of the pixels block (17) in the preceding original image (11) from which the candidate motion vector (16) points to the pixels block (18) with which the motion vector, from which said candidate motion vector (16) is generated, is associated; and
- a determination unit for determining the penalty on the basis of a comparison between said first and second values so that the penalty is relatively large when said first and second values are substantially different and is relatively small when said first and second values are substantially equivalent.

9. Device according to Claim 7 or 8, which furthermore comprises, for a candidate motion vector generated from a spatial motion vector:
- a luminance calculation unit for calculating a third value corresponding to the mean luminance of the pixels of the pixels block (15) in the following original image (12) to which the candidate motion vector (16) points from the current block (13);
- a luminance calculation unit for calculating a fourth value corresponding to the mean luminance of the pixels of the pixels block (19) in the following original image (12) to which the candidate motion vector (16) points from the pixels block (18) with which the motion vector, from which the candidate motion vector (16) is generated, is associated; and
- a determination unit for determining the penalty on the basis of a comparison between said third and fourth values so that the penalty is relatively large when said third and fourth values are substantially different and is relatively small when said third and fourth values are substantially equivalent.

10. Device according to any one of Claims 7 to 9, which furthermore comprises, for a candidate motion vector generated from a temporal motion vector:
- a contrast calculation unit for calculating a fifth value corresponding to the maximum contrast between pixels of the pixels block (14) of the preceding original image (11) from which the candidate vector points to the current pixels block (13); and
- a determination unit for determining the penalty on the basis of the fifth value, so that the penalty is relatively large when said fifth value is relatively low and is relatively small when said fifth value is relatively high.

11. Device according to any one of Claims 7 to 10, which furthermore comprises, for a candidate motion vector generated from a temporal motion vector:
- a contrast calculation unit for calculating a sixth value corresponding to the maximum contrast between pixels of the pixels block (15) of the following original image (12) to which the candidate vector (16) points from the current pixels block (13); and
- a determination unit for determining the penalty on the basis of the sixth value, so that the penalty is relatively large when said sixth value is relatively low and is relatively small when said sixth value is relatively high.

12. Device according to any one of Claims 7 to 11, wherein the subset of candidate motion vectors includes the candidate motion vector having the lowest error and a determined number of candidate motion vectors having errors, the difference between which and said lowest error is less than a determined threshold value.

13. "Computer program" product that can be loaded directly into the internal memory of a digital computer, which comprises software code portions for executing the steps of the method according to any one of Claims 1 to 6 when said program is run on the computer.

## Patentansprüche

1. Verfahren zur Bewegungsschätzung für die Bearbeitung von Bildern, die jeweils zwischen ein vorangehendes Originalbild und ein nachfolgendes Originalbild in einer Sequenz bestimmter Bilder eingefügt werden sollen, wobei jedes Bild in mehrere Pixelblöcke unterteilt ist, wobei ein Bewegungsvektor mit jedem der Pixelblöcke eines bearbeiteten Bildes verbunden ist und wobei das Verfahren für einen jeweiligen Block eines gerade zu bearbeitenden Bildes folgende Schritte umfasst :
- Auswahl von Bewegungsvektoren im Hinblick auf bestimmte Pixelblöcke für das gerade zu bearbeitende Bild und / oder von Bewegungsvektoren im Hinblick auf die gewünschten Pixelblöcke eines schon bearbeiteten Bildes, welche jeweils räumliche Bewegungsvektoren und zeitliche Bewegungsvektoren (101) genannt werden;
- Erzeugung von potenziellen Bewegungsvektoren, ausgehend von auf diese Weise ausgewählten Bewegungsvektoren (102);
- Fehlerberechnung für jeden der potenziellen Bewegungsvektoren (103);
- Bestimmung eines Fehlermaßes für mindestens eine Untereinheit der potenziellen Bewegungsvektoren (104);
- Auswahl eines Bewegungsvektors unter den genannten potenziellen Bewegungsvektoren im Hinblick auf den errechneten Fehler und das **dadurch** errechnete Fehlermaß (105);
- Speichern einer Information, die besagten ausgewählten Bewegungsvektor mit dem jeweiligen Pixelblock (106) in Bezug setzt; wonach besagtes Fehlermaß durch die Pixelwerte der Pixelblöcke (14) im vorangehenden Originalbild (11), von dem ausgehend der potenzielle Bewegungsvektor (16) den aktuellen Block (13) ermittelt, bestimmt wird und/oder im Hinblick auf die Pixelwerte der Pixelblöcke (15) im nachfolgenden Originalbild (12), das durch den potenziellen Bewegungsvektor (16), ausgehend vom aktuellen Block (13), ermittelt wird.

2. Verfahren nach Anspruch 1, wobei dieses außerdem für einen potenziellen Bewegungsvektor, der ausgehend von einem räumlichen Bewegungsvektor erzeugt wird, die folgenden Schritte umfasst:
- Berechnen eines ersten Wertes entsprechend einer durchschnittlichen Luminanz der Pixel des Pixelblocks (14) im vorangehenden Originalbild (11), von dem ausgehend der potenzielle Bewegungsvektor (16) den aktuellen Block (13) ermittelt;
- Berechnen eines zweiten Wertes entsprechend einer durchschnittlichen Luminanz der Pixel des Pixelblocks (17) im vorangehenden Originalbild (11), von dem ausgehend der potenzielle Bewegungsvektor (16) den Pixelblock (18), mit dem der Bewegungsvektor ausgehend von besagtem potenziellen Bewegungsvektor (16) verbunden ist, erzeugt wird;
- Bestimmen des Fehlermaßes durch einen Vergleich der besagten ersten und zweiten Werte, so dass das Fehlermaß relativ hoch ist, wenn die besagten ersten und zweiten Werte deutlich voneinander verschieden sind und das Fehlermaß relativ niedrig sind, wenn die besagten ersten und zweiten Werte deutlich gleichwertig sind.

3. Verfahren nach Anspruch 1 oder 2, wobei dieses außerdem für einen potenziellen Bewegungsvektor, der ausgehend von einem räumlichen Bewegungsvektor erzeugt wird, folgende Schritte umfasst:
- Berechnen eines dritten Wertes entsprechend einer durchschnittlichen Luminanz der Pixel des Pixelblocks (15) im nachfolgenden Originalbild (12), wobei dieser durch den potenziellen Bewegungsvektor (16), ausgehend von einem aktuellen Block (13), ermittelt wird;
- Berechnen eines vierten Wertes entsprechend einer durchschnittlichen Luminanz der Pixel des Pixelblocks (19) im nachfolgenden Originalbild (12), wobei dieser durch den potenziellen Bewegungsvektor (16), ausgehend vom Pixelblock (18), mit dem der Bewegungsvektor verbunden ist und von dem ausgehend der potenzielle Bewegungsvektor (16) erzeugt wird ermittelt wird;
- Bestimmen des Fehlermaßes durch einen Vergleich der besagten dritten und vierten Werte, so dass das Fehlermaß relativ hoch ist, wenn die besagten dritten und vierten Werte deutlich voneinander verschieden sind und das Fehlermaß relativ niedrig ist, wenn die besagten dritten und vierten Werte deutlich gleichwertig sind.

4. Verfahren nach einem beliebigen der vorangegangenen Ansprüche, wobei dieses außerdem für einen potenziellen Bewegungsvektor, der ausgehend von einem zeitlichen Bewegungsvektor erzeugt wird, die folgenden Schritte umfasst:
- Berechnen eines fünften Wertes entsprechend des maximalen Kontrastes der Pixel des Pixelblocks (14) des vorangehenden Originalbildes (11), von dem ausgehend der potenzielle Vektor den aktuellen Pixelblock (13) ermittelt;
- Bestimmen des Fehlermaßes durch besagten fünften Wert, so dass das Fehlermaß relativ hoch ist, wenn besagter fünfter Wert relativ niedrig ist und das Fehlermaß relativ niedrig ist, wenn besagter fünfter Wert relativ hoch ist.

5. Verfahren nach einem beliebigen der vorangegangenen Ansprüche, wobei dieses außerdem für einen potenziellen Bewegungsvektor, der ausgehend von einem zeitlichen Bewegungsvektor erzeugt wird, die folgenden Schritte umfasst:
- Berechnen eines sechsten Wertes entsprechend des maximalen Kontrastes der Pixel des Pickelblocks (15) des nachfolgenden Originalbildes (12), das vom potenziellen Vektor (16), ausgehend vom aktuellen Pixelblock, (13) ermittelt wird;
- Bestimmen des Fehlermaßes durch besagten sechsten Wert, so dass das Fehlermaß relativ hoch ist, wenn besagter sechster Wert relativ niedrig ist und das Fehlermaß relativ niedrig ist, wenn besagter sechster Wert relativ hoch ist.

6. Verfahren nach einem beliebigen der vorangegangenen Ansprüche, nach dem zufolge die Untereinheit der potenziellen Bewegungsvektoren denjenigen potenziellen Bewegungsvektor umfasst, der den geringsten Fehler und eine bestimmte Anzahl an potenziellen Bewegungsvektoren umfasst, wobei dieser Fehler aufweist, wobei die Differenz zum besagten geringsten Fehler kleiner ist als ein festgelegter Schwellenwert.

7. Vorrichtung zur Bewegungsschätzung für die Bearbeitung von Bildern, welche jeweils zwischen ein vorangegangenes Originalbild und ein nachfolgendes Originalbild in einer bestimmten Bildsequenz eingefügt werden sollen, wobei jedes Bild in mehrere Pixelblöcke unterteilt ist, und wobei ein Bewegungsvektor mit jedem der Pixelblöcke eines bearbeiteten Bildes assoziiert ist und die Vorrichtung für einen aktuellen Block eines gerade bearbeiteten Bildes umfasst:
- Auswahleinheit zur Auswahl von Bewegungsvektoren, die jeweils mit bestimmten Pixelblöcken des gerade bearbeiteten Bildes verknüpft sind und/oder Bewegungsvektoren, die jeweils mit bestimmten Pixelblöcken eines schon bearbeiteten Bildes, die jeweils räumliche und zeitliche Bewegungsvektoren genannt werden, assoziiert sind;
- Erzeugungseinheit zur Erzeugung von potenziellen Bewegungsvektoren, ausgehend von auf diese Weise ausgewählten Bewegungsvektoren;
- Berechnungseinheit zur Berechnung eines Fehlers für jeden potenziellen Bewegungsvektor;
- Bestimmungseinheit zur Bestimmung eines Fehlermaßes für mindestens eine Untereinheit der potenziellen Bewegungsvektoren;
- Auswahleinheit zur Auswahl eines Bewegungsvektors aus den genannten potenziellen Bewegungsvektoren durch den besagten errechneten Fehler und das **dadurch** bestimmte Fehlermaß;
- Speicher zum Abspeichern einer Information, die besagten ausgewählten Bewegungsvektor mit dem aktuellen Pixelblock assoziiert;
wobei das besagte Fehlermaß durch die Pixelwerte des Pixelblocks (14) im vorangehenden Originalbild (11) bestimmt wird, von dem ausgehend der potenzielle Bewegungsvektor (16) den aktuellen Block (13) ermittelt und / oder durch die Pixelwerte des Pixelblocks (15) im nachfolgenden Originalbild (12) bestimmt wird, das durch den potenziellen Bewegungsvektor (16), ausgehend vom aktuellen Block (13), ermittelt wird;

8. Vorrichtung nach Anspruch 7, wobei diese außerdem für einen potenziellen Bewegungsvektor, der ausgehend von einem räumlichen Bewegungsvektor erzeugt wird, umfasst:
- Bereichnungseinheit der Luminanz zur Berechnung eines ersten Wertes entsprechend der durchschnittlichen Luminanz der Pixel des Pixelblocks (14) im vorangehenden Originalbild (11), von dem ausgehend der potenzielle Bewegungsvektor (16) den aktuellen Block (13) ermittelt;
- Berechnungseinheit der Luminanz zur Berechnung eines zweiten Wertes entsprechend der durchschnittlichen Luminanz der Pixel des Pixelblocks (17) im vorangehenden Originalbild, von dem ausgehend der potenzielle Bewegungsvektor (16) den Pixelblock (18) ermittelt, an den der Bewegungsvektor, der ausgehend von besagtem potenziellen Bewegungsvektor (16) erzeugt wird, assoziiert ist;
- Bestimmungseinheit zur Bestimmung des Fehlermaßes durch einen Vergleich der besagten ersten und zweiten Werte, so dass das Fehlermaß relativ hoch ist, wenn die besagten ersten und zweiten Werte deutlich voneinander verschieden sind und das Fehlermaß relativ niedrig ist, wenn die besagten ersten und zweiten Werte deutlich gleichwertig sind.

9. Vorrichtung nach Anspruch 7 oder 8, wobei diese außerdem für einen potenziellen Bewegungsvektor, der ausgehend von einem räumlichen Bewegungsvektor erzeugt wird, umfasst:
- Einheit zur Berechnung der Luminanz, um einen dritten Wert entsprechend der durchschnittlichen Luminanz der Pixel des Pixelblocks (15) im nachfolgenden Originalbild (12) zu berechnen, welches durch den potenziellen Bewegungsvektor, (16) ausgehend vom aktuellen Block (13), ermittelt wird;
- Berechnungseinheit der Luminanz zur Berechnung eines vierten Wertes entsprechend der durchschnittlichen Luminanz der Pixel des Pixelblocks (19) im nachfolgenden Originalbild (12), das durch den potenziellen Bewegungsvektor (16), ausgehend vom Pixelblock (18), ermittelt wird, mit dem der Bewegungsvektor, von dem ausgehend der potenzielle Bewegungsvektor (16) erzeugt wird, assoziiert ist;
- Bestimmungseinheit zur Bestimmung des Fehlermaßes durch einen Vergleich der besagten dritten und vierten Werte, so dass das Fehlermaß relativ hoch ist, wenn die besagten dritten und vierten Werte deutlich voneinander verschieden sind und das Fehlermaß relativ niedrig ist, wenn die besagten dritten und vierten Werte deutlich gleichwertig sind.

10. Vorrichtung nach einem beliebigen der Ansprüche 7 bis 9, wobei diese außerdem für einen potenziellen Bewegungsvektor, der ausgehend von einem zeitlichen Bewegungsvektor erzeugt wird, umfasst:
- Einheit zur Berechnung des Kontrastes zur Berechnung eines fünften Wertes hinsichtlich des maximalen Kontrastes der Pixel des Pixelblocks (14) des vorangehenden Orginalbildes (11), von dem ausgehend der potenzielle Vektor den aktuellen Pixelblock (13) bestimmt;
- Einheit zur Bestimmung des Fehlermaßes durch den fünften Wert, so dass das Fehlermaß relativ hoch ist, wenn besagter fünfter Wert relativ niedrig ist und das Fehlermaß relativ niedrig ist, wenn besagter fünfter Wert relativ hoch ist.

11. Vorrichtung nach einem beliebigen der Ansprüche 7 bis 10, wobei diese außerdem für einen potenziellen Bewegungsvektor, der ausgehend vom zeitlichen Bewegungsvektor erzeugt wird, umfasst:
- Berechnungseinheit des Kontrastes zur Berechnung eines sechsten Wertes hinsichtlich des maximalen Kontrastes unter den Pixeln des Pixelblocks (15) des nachfolgenden Originalbildes (12), das durch den gesuchten Vektor (16), ausgehend vom aktuellen Pixelblock (13), ermittelt wird;
- Einheit zur Bestimmung des Fehlermaßes im Hinblick auf den sechsten Wert, so dass das Fehlermaß relativ hoch ist, wenn besagter sechster Wert relativ niedrig ist und das Fehlermaß relativ niedrig ist, wenn besagter sechster Wert relativ hoch ist.

12. Vorrichtung nach irgendeinem der Ansprüche 7 bis 11, wobei die Untereinheit der gesuchten Bewegungsvektoren denjenigen gesuchten Bewegungsvektor umfasst, der den geringsten Fehler und eine bestimmte Anzahl an potenziellen Bewegungsvektoren aufweist, wobei diese Fehler aufweisen, deren Differenz zum besagten geringsten Fehler niedriger ist als ein festgelegter Schwellenwert.

13. Produkt eines "Computerprogrammes", das im internen Speicher eines nummerischen Computers direkt geladen werden kann, wobei dieses Teile von Software-Codes für die Durchführung der Schritte des Verfahrens gemäß einem beliebigen der Ansprüche 1 bis 5 umfasst, wenn das besagte Programm in einem Computer ausgeführt wird.
